# EUROPÄISCHE PATENTSCHRIFT

(11) **EP 1 141 691 B1**
(45) Veröffentlichungstag und Bekanntmachung des Hinweises auf die Patenterteilung: **18.08.2004**
(21) Anmeldenummer: 99972736.5
(22) Anmeldetag: 18.11.1999
(51) Int. Cl.: G01N 27/30

(54) **ELEKTRODENSYSTEM**
ELECTRODE SYSTEM
SYSTEME D'ELECTRODES

(30) Priorität: 19.11.1998 AT 193098
(43) Veröffentlichungstag der Anmeldung: 10.10.2001
(73) Patentinhaber: F.HOFFMANN-LA ROCHE AG, 4070 Basel (CH)
(72) Erfinder: OFFENBACHER, Helmut, A-8020 Graz (AT)
(74) Vertreter: Schwarz, Albin, Dr.
(86) Internationale Anmeldenummer: PCT/AT1999/000279
(87) Internationale Veröffentlichungsnummer: WO 2000/031524

(56) Entgegenhaltungen:
- EP-A- 0 078 636
- EP-A- 0 528 557
- EP-A- 0 593 990
- PATENT ABSTRACTS OF JAPAN vol. 014, no. 293 (P-1066), 25. Juni 1990 (1990-06-25) & JP 02 090052 A (TOYOBO CO LTD), 29. März 1990 (1990-03-29)
- PATENT ABSTRACTS OF JAPAN vol. 008, no. 121 (P-278), 7. Juni 1984 (1984-06-07) & JP 59 026052 A (NIPPON DENSHIN DENWA KOSHA), 10. Februar 1984 (1984-02-10)

## Beschreibung

Die Erfindung betrifft ein Elektrodensystem, insbesondere für elektrochemische Sensoren, welches eine Arbeitselektrode, eine Gegenelektrode und einen Elektrolyt umfaßt.

Ein solches Elektrodensystem wird beispielsweise bei der Sauerstoffelektrode nach Clark eingesetzt.

Die Sauerstoffelektrode nach Clark wird unter anderem zur Messung des Partialdrucks von Sauerstoff im Blut verwendet. Die Blutgasanalyse ist ein wichtiger Zweig der medizinischen Diagnostik und vermag Aussagen über den Status des Herz-Kreislaufsystems sowie über metabolische Vorgänge im Organismus zu treffen.

Zur Bestimmung des Partialdrucks von Sauerstoff im Blut und anderen biologischen Medien werden Sensorsysteme eingesetzt, die entweder auf dem Prinzip der elektrochemischen Sensorik, wie z.B. der Amperometrie, oder auf dem Prinzip der dynamischen Fluoreszenzlöschung beruhen. Die Sauerstoffelektrode nach Clark ist ein Vertreter der ersteren Gruppe.

Das Prinzip der Sauerstoffelektrode nach Clark beruht auf der Umsetzung (Reduktion) von O₂ an einer Platinelektrode - in Gegenwart von H₂O - zu OH⁻. Als anodische Gegenreaktion dient üblicherweise, jedoch nicht ausschließlich, die Freisetzung von Silberionen an einer Silberanode.

Die Lebensdauer eines derartigen Sensorsystems hängt von einer Reihe von Faktoren ab. Eine in der Praxis wesentliche Begrenzung entsteht jedoch durch die Abscheidung des an der Anode freigesetzten Silbers an der Kathode. Dadurch wird die Polarisierbarkeit der Kathode unterbunden, was zu unerwünschten Nebenreaktionen und zu einer zunehmenden Inaktivierung der Elektrode führt. Eine derart inaktivierte Elektrode kann in der Regel nur mit mechanischen Maßnahmen regeneriert werden. Im Zuge der Miniaturisierung und gewünschten Wartungsfreiheit einer Sauerstoffelektrode nach Clark wird eine mechanische Regenerierung jedoch nahezu unmöglich.

Um die Lebenszeit eines Sensorsystems in der Art der Sauerstoffelektrode nach Clark zu verlängern, sind eine Reihe von Möglichkeiten bekannt. Einerseits wird versucht, durch entsprechende Salzlösungen die Silberkonzentration möglichst niedrig zu halten. Andererseits wird durch mechanische und chemische Maßnahmen die Diffusion des Silbers zur Kathode möglichst gehemmt. Dies sind jedoch nur verzögernde Maßnahmen:

Eine andere Möglichkeit der Verlängerung der Lebenszeit besteht in der Verwendung von Gold oder Platin als Anodenmaterial. Derartige Anoden sind jedoch polarisierbar und ergeben daher auf längere Zeit keine stabilen Potentiale. Die Lebensdauer solcher Elektrodensysteme beträgt einige Wochen. Verwendet man dagegen nicht polarisierbare Metalle, so erfolgen wieder entsprechende Ablagerungen an der Kathode bzw. Oberflächenveränderungen an der Anode.

Besonders schwerwiegend ist das Silberabscheidungsproblem bei miniaturisierten, nach dem Prinzip der Planartechnik gefertigten Sauerstoffelektroden, wo die unmittelbare Nähe der Silberanode zur Platinkathode sowie die kleine zur Verfügung stehende Elektrolytmenge binnen kürzester Zeit infolge Silberabscheidung zur Inaktivierung der Kathode fuhren.

Beispielsweise aus der EP-A-0 603 154 ist eine amperometrische Enzymelektrode zur Messung der Konzentration eines Enzymsubstrats beschrieben, wobei in bekannter Weise der Zerfall von H₂O₂ zu H⁺ und Sauerstoff amperometrisch gemessen wird. Das Elektrodenmaterial der Arbeitselektrode besteht aus einem redoxinaktiven Leiter mit einem leitfähigen Pigment, einem selbst-nicht leitenden Bindemittel und einer darin fein verteilten katalytisch aktiven Substanz. Als katalytisch aktive Substanz kommt zum Beispiel auf Graphit oder Aktivkohle abgeschiedenes Mangandioxid in Frage. Durch die katalytisch aktive Substanz werden Interferenzen bei der Messung des Enzymsubstrats unterdrückt. Als Gegenelektrode wird bei diesem bekannten System eine konventionelle Silber/Silberchlorid-Elektrode - mit den bekannten Nachteilen - eingesetzt.

Die Erfindung stellt sich die Aufgabe, die Probleme der bekannten Elektrodensysteme zu vermeiden und ein Elektrodensystem zu scharfen, das eine verbesserte Langzeitstabilität aufweist. Insbesondere soll das Elektrodensystem für eine miniaturisierte Sauerstoffelektrode einsetzbar sein.

Diese Aufgabe wird durch das Elektrodensystem nach anspruch 1 gelöst. Ein Elektrodensystem gemäβ dem Oberbegriff des Anspruchs ist aus JP-A-59026052 bekannt.

Es hat sich gezeigt, daß beim erfindungsgemäßen Elektrodensystem die Lebenszeit beträchtlich erhöht ist, was darauf zurückzuführen ist, daß es an der Arbeitselektrode nicht zu Ablagerungen kommt, die die Polarisierbarkeit der Arbeitselektrode herabsetzen und zu unerwünschten Nebenreaktionen an der Arbeitselektrode führen. Gleichzeitig bleibt durch die erfindungsgemäße Maßnahme jedoch das Potential der Gegenelektrode über lange Zeit stabil.

Obgleich eine Elektrode, welche aus einem Kohlenstoff enthaltenden Material gebildet ist, im Prinzip gleichsam wie eine Elektrode mit Gold oder Platin als Elektrodenmaterial das Phänomen der Polarisierbarkeit zeigt, wurde dennoch überraschenderweise gefunden, daß die Langzeitstabilität des erfindungsgemäßen Elektrodensystems deutlich größer ist als die eines herkömmlichen Elektrodensystems.

Gemäß einer bevorzugten Ausführungsform der Erfindung ist die Gegenelektrode anodisch geschaltet.

Das erfindungsgemäße Elektrodensystem wird vorzugsweise für einen amperometrischen Sauerstoffsensor, insbesondere für einen miniaturisierten amperometrischen Sauerstoffsensor, eingesetzt. Das bei einem miniaturisierten amperometrischen Sauerstoffsensor besonders schwerwiegende Problem der raschen Inaktivierung kann durch Einsatz des erfindungsgemäßen Elektrodensystems wirksam vermieden werden.

Während beispielsweise Edelmetallanoden bei einer bekannten Sauerstoffelektrode nach Clark bei angelegter Betriebsspannung und konstanter Sauerstoffkonzentration (pO₂), z.B. Luftpegel, spätestens innerhalb von 3 bis 4 Monaten eine Halbierung des Stromflusses bedingen, zeigen die erfindungsgemäßen Elektroden auf Basis von elementarem Kohlenstoff bis etwa 6 Monate einen konstanten Stromfluß. Erst nach 7 bis 9 Monaten unterschreitet der Stromfluß einen Wert, der für eine genügend genaue Sauerstoffmessung erforderlich ist.

Die bei einem amperometrischen Sauerstoffsensor unter Einsatz des erfindungsgemäßen Elektrodensystems an der Anode ablaufende Elektrodenreaktion ist, wie polarographische Studien an Elektrodensystemen mit getrennten Elektrolyträumen bei Variation des pH-Wertes sowie des pO₂-Wertes gezeigt haben, im wesentlichen eine Umkehrung der Kathodenreaktion. Das elementaren Kohlenstoff enthaltende Elektrodenmaterial besitzt gute Adsorber-Eigenschaften für Sauerstoff, was sich vorteilhaft auf die Langzeitstabilität des Elektrodensystems auswirkt.

Vorzugsweise umfaßt beim erfindungsgemäßen Elektrodensystem das Elektrodenmaterial der Gegenelektrode ein Gemisch aus elementarem Kohlenstoff und zumindest einem Polymer. Der elementare Kohlenstoff ist hierbei bevorzugt Graphit und/oder Ruß und/oder Faserkohlenstoff und/oder Glaskohlenstoff.

Es hat sich gezeigt, daß beispielsweise bei Zusatz von Ruß die aktive Elektrodenoberfläche vergrößert und die Lebenszeit des Elektrodensystems verlängert wird. Sehr gute Eigenschaften im Hinblick auf LangzeitstabiIität zeigen insbesondere Elektroden mit Elektrodenmaterial aus Faserkohlenstoff. Sie zeichnen sich durch eine Stromkonstanz über einen Zeitraum von mehr als 18 Monaten aus. Eine Abdichtung ist bei diesen Elektrodenmaterialien allerdings schwierig.

Das Polymer ist bevorzugt aus einer Gruppe, umfassend Vinylharze, Polyolefine, Silikone, Elastomere auf Basis von Polyurethanen, Polybutadien oder Butadiencopolymere, insbesondere Nitrilobutylkautschuk, gewählt. Besonders bevorzugt im Hinblick auf die Langzeitstabilität der Elektrodensysteme sind Vinylharze und Nitrilobutylkautschuk.

Zweckmäßigerweise enthält das Polymer Additive, insbesondere Weichmacher, Extrusionshilfen und Stabilisatoren.

Vorteilhaft ist das Elektrodenmaterial der Gegenelektrode eine gegebenenfalls siebdruckfähige Paste. Dies ermöglicht eine Herstellung der Gegenelektrode auf einfache Weise. Das Elektrodenmaterial kann in Form einer lösungsmittelhältigen Siebdruckpaste durch Tauchen, Schablonieren oder Siebdruck auf einen Träger aufgebracht werden.

Gemäß einer weiteren bevorzugten Ausführungsform ist das Elektrodenmaterial der Gegenelektrode ein spritzgußfähiges Gemisch, umfassend Kohlenstoff und ein thermoplastisches oder ein zu einem Duroplasten vernetzendes Polymer. Hierdurch wird ebenfalls eine Elektrodenherstellung auf einfache Weise ermöglicht.

Der Elektrolyt umfaßt zumindest einen Mediator. Durch Zusatz eines Mediators wird die sogenannte Alterung der Elektrodenoberfläche drastisch vermindert, so daß beispielsweise bei einem Sauerstoff-Sensorsystem die Dauer der Stromkonstanz bei einer permanent angelegten Betriebsspannung auf 12 bis 18 Monate ausgedehnt werden konnte. Ein solcher Mediator-Effekt konnte bei einer Sauerstoffelektrode mit Goldanode nicht bzw. nicht in einem signifikanten Ausmaß beobachtet werden.

Der Mediator kann vorzugsweise ein Übergangsmetallkomplex sein, wobei das Metall aus einer Gruppe, umfassend Mangan, Eisen, Kobalt und Vanadium, gewählt ist. Der Mediator kann weiters bevorzugt ein Übergangsmetallkomplex des Cyclopentadienidanions, insbesondere Ferrocen oder ein Derivat davon, sein. Gemäß einer weiteren bevorzugten Ausführungsform ist der Mediator Dimethylferrocendicarboxylat, dessen Hydrolyseprodukt oder ein Salz von Ferrocendicarbonsäure. Nach einer noch weiteren bevorzugten Ausführungsform ist der Mediator ein Mangan(II)-, Kobalt(II)- oder Vanadium(IV)-Komplex von Phthalocyanin oder ein Mn(III)- oder Kobalt(II)-Komplex von 2,3,7,8,12,13,17, 18-Octaethyl-21H,23H-porphin oder Eisenhexacyanoferrat. Der Mediator kann auch ein Übergangsmetalloxid, vorzugsweise mittlerer Wertigkeit, insbesondere Mangandioxid, sein. Weiters kann der Mediator bevorzugt Tetrathiafulvalen, 7,7,8,8-Tetracyanchinodimethan, oder ein Derivat oder Komplex davon, insbesondere ein 1: 1 -Komplex aus Tetrathiafulvalen und 7,7,8,8-Tetracyanchinodimethan, sein. Besonders bevorzugt unter diesen Mediatoren sind im Hinblick auf die Langzeitstabilität der Elektrodensysteme Ferrocen, Dimethylferrocendicarboxylat und Mangandioxid.

Vorzugsweise ist der Mediator im Elektrodenmaterial der Gegenelektrode in einer Konzentration in einem Bereich von etwa 1% bis etwa 30% und im Elektrolyt in einer Konzentration von maximal 3 mmol/l vorhanden. Zweckmäßigerweise wird der Mediator vor der Elektrodenherstellung in das Elektrodenmaterial eingebracht.

Insbesondere umfaßt das Elektrodenmaterial der Gegenelektrode bevorzugt ein Gemisch aus Kohlenstoff und Nitrilobutylkautschuk und der Elektrolyt Dimethylferrocendicarboxylat als Mediator. Nach einer weiteren besonders bevorzugten Ausführungsform umfaßt das Elektrodenmaterial der Gegenelektrode ein Gemisch aus Graphit und Vinylharz und der Elektrolyt Dimethylferrocendicarboxylat als Mediator. Gemäß einer noch weiteren besonders bevorzugten Ausführungsform umfaßt das Elektrodenmaterial der Gegenelektrode ein Gemisch aus Graphit und Vinylharz sowie Mangandioxid als Mediator. Ebenfalls besonders bevorzugt ist ein Elektrodensystem mit Elektrodenmaterial aus Faserkohlenstoff. Bei den vorstehend genannten Elektrodensystemen ist eine Stromkonstanz über einen besonders langen Zeitraum gegeben.

Vorzugsweise enthält beim erfindungsgemäßen Elektrodensystem der Elektrolyt Ethylenglykol und/oder Wasser als Lösungsmittel, sowie Natriumchlorid als Leitsalz und/oder einen Phosphatpuffer.

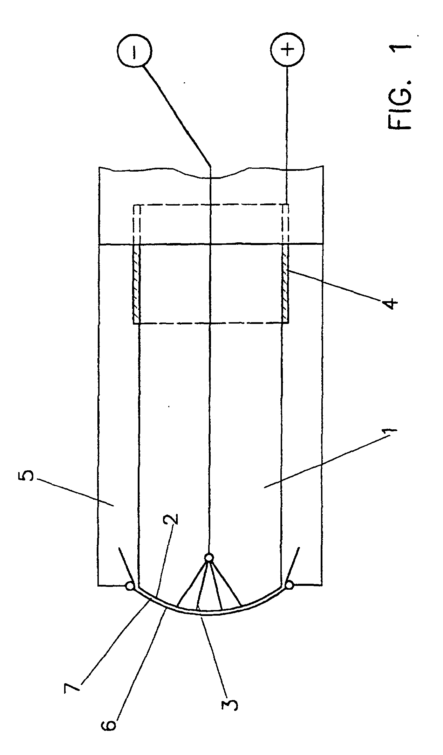

Die Erfindung wird nachfolgend anhand der Zeichnung (Fig. 1 bis 5) und anhand von Ausführungsbeispielen noch näher erläutert.

In Fig. 1 ist schematisch das Bauprinzip einer Sauerstoffelektrode nach Clark dargestellt. Die Sauerstoffelektrode besteht aus einem zylindrischen Glaskörper 1, dessen Stirnfläche 2 eine Kalottenform aufweist. An dieser Stirnfläche 2 treten ein oder mehrere Edelmetalldrähte 3, bevorzugt Platindrähte, die als Kathode geschaltet sind, an die Oberfläche des Glaskörpers 1. Am Schaftteil des Glaskörpers 1 ist eine Anode 4 aus Silberblech zylindrisch angeordnet. Der Glaskörper 1 wird von einem aus einem Leitsalz und einem Puffersalzsystem gebildeten Elektrolyten im Elektrolytraum 5 umgeben.

Im Stirnflächenbereich 2 liegt eine gaspermeable (Teflon-) Membran 6 so am Glaskörper 1 an, daß ein dünner Elektrolytspalt 7 zwischen Glaskörper 1 und Membran 6 gewährleistet ist. In diesem Elektrolytspalt 7 lösen sich die durch die Membran 6 hindurchtretenden. Gaskomponenten. Der Sauerstoff selbst diffundiert gemäß O₂-Konzentrationsgradienten zur Kathode und wird dort zu OH⁻ umgesetzt. Die Pufferkapazität des Elektrolyten bedingt, daß der pH-Wert im Kathodenbereich während der Sauerstoffumsetzung nicht allzu stark ansteigt. Die Diffusion der Elektrolytionen sorgt für eine Regenerierung des Puffersystems vor Ort und verhindert somit das Zusammenbrechen des Puffersystems im Elektrolytspalt 7 bei Erschöpfung der Pufferkapazität. In diesem Elektrolytspalt 7 fließt natürlich auch ein Ionenstrom, der dem für die O₂-Reduktion benötigten Elektronenstrom äquivalent ist.

Erfindungsgemäß wurde eine Sauerstoffelektrode nach Clark dahingehend modifiziert, daß die Silberanode durch eine Gegenelektrode nach Anspruch 1 ersetzt wurde.

Folgende Elektrodenmaterialien wurden getestet:

### A. Mediatorfreie Graphitpasten

1. Graphit 50-70% in einer Siebdruckpaste, deren Polymerbindemittel ein Vinylharz ist (= Graphitpaste)
2. Graphitpaste + 5-10% Flammruß, bezogen auf den Pastenfestkörper (= Graphit und Polymerkomponente)

Unter Graphitpaste (Kohlenstoff-Paste) wird hierbei ein Material mit 50 ± 10% Kohlenstoff-Polymer und 50 ± 10% Losungsmittel verstanden.

### B. Mediatorhaltige Graphitpasten

1. Graphitpaste + 1% Ferrocen, bezogen auf Pastenfestkörper
2. Graphitpaste + 1% TTF-TCNQ-Komplex (= Tetrathiafulvalen-7,7,8,8-Tetracyanchinodimethan-Komplex), bezogen auf Pastenfestkörper
3. Graphitpaste + 1% Berlinerblau (Eisenhexacyanoferrat), bezogen auf Pastenfestkörper
4. Graphitpaste + 10-30% Mangandioxid, bezogen auf Pastenfestkörper

### C. Spritzgießfähige, leitfähige thermo- bzw. duroplastische Kohlenstoff-Polymersysteme,

wobei als Polymere
1. Polyolefine
2. Nitrilobutylkautschuk (NBR = Nitrilobutylrubber)
3. ein heißvemetzendes Silikon-2-Komponenten-System
eingesetzt wurden.

Als Elektrolyt wurde ein System gewählt, dessen Lösungsmittel aus 90 Gew.% Ethylenglykol und 10 Gew.% Wasser bestand, welches eine Konzentration an Leitsalz (NaCl) von 80 mmol/l und eine Phosphatpufferkonzentration von 16 mmol/l aufwies. Das Verhältnis von primärem zu sekundärem Phosphat wurde so variiert, daß Elektrolyte mit pH-Werten zwischen 6,3 und 7,8 resultierten.

Die mediatorhaltigen Elektrodenmaterialien der Gruppe B wurden mit mediatorfreien Elektrolyten und die mediatorfreien Elektrodenmaterialien der Gruppen A und C mit Elektrolyten getestet, die mit den nachfolgend angeführten Mediatoren dotiert waren. Die Konzentration der Mediatoren entsprach der Sättigungskonzentration im Elektrolyten, wurde jedoch nach oben hin mit 3 mmol/l begrenzt.

Folgende Mediatoren im Elektrolyten wurden getestet: Ferrocen, 1,1 -Dimethylferrocendicarboxylat, TTF (Tetrathiafulvalen), TCNQ (7,7,8,8-Tetracyanchinodimethan), TTF-TCNQ-Komplexe, Berlinerblau (Eisenhexacyanoferrat), Phthalocyaninkomplexe von Mn(II), Kobalt(II) und Vanadium(IV), sowie Mn(III)- und Kobalt(II)- Komplexe von 2,3,7, 8,12,13,17,18-Octaethyl-21H,23H-Porphin.

Bei Einsatz von Graphit-Vinylharzpasten als Elektrodenmaterial wurden diese auf einen Träger aufgebracht. Spritzgießfähige Elektrodenmaterialien wurden durch Spritzgußverfahren zu zylindrischen oder hufeisenförmigen Elektrodenkörpern verarbeitet, welche außerhalb des Elektrolytraumes kontaktiert wurden.

Die mit den erfindungsgemäßen Elektrodenmaterialien modifizierten Sauerstoffelektroden nach Clark wurden in Langzeitversuchen bei einer Anlegespannung von 700 mV bei . Raumtemperatur getestet, wobei die Elektroden einer wassergesättigten Luftatmosphäre ausgesetzt wurden.

Die Prüfung der Elektroden erfolgte über Langzeitbeobachtung des Stromverlaufes, durch Aufnahme eines Polarogramms einmal monatlich und Beobachtung von dessen Veränderung, sowie durch Aufzeichnung der Abhängigkeit des Stromflusses vom O₂-Partialdruck. Für letzteren Test wurden folgende Meßmedien verwendet:
- für pO₂ = 0 mm Hg eine Bisulfitlösung;
- für pO₂ = 158 Torr Luft-gesättigtes Wasser;
- für pO₂ = 760 Torr ein mit, O₂ tonometriertes Wasser.

Unter tonometriertem Wasser wird hierbei Wasser verstanden, welches mit einem Eich- oder Meßgas äquilibriert wurde.

Optimierte Systeme wurden in Form einer miniaturisierten Sauerstoffelektrode nach Clark unter Gerätebedingungen auf ihre Tauglichkeit getestet.

Folgende Ergebnisse wurden erzielt:
- Sämtliche Sauerstoffelektroden mit Anodenmaterial auf Kohlenstoff-Polymer-Basis zeigten im Vergleich zu herkömmlichen Sauerstoffelektroden nach Clark ein weitgehend identes Polarogramm und annähernd gleiche Stromstärken bei identen pO₂-Werten.
- Sowohl Mediatoren als auch die Vergrößerung der aktiven Oberfläche durch Zusatz von Ruß übten im wesentlichen einen positiven Einfluß auf die Alterung der Elektroden aus.

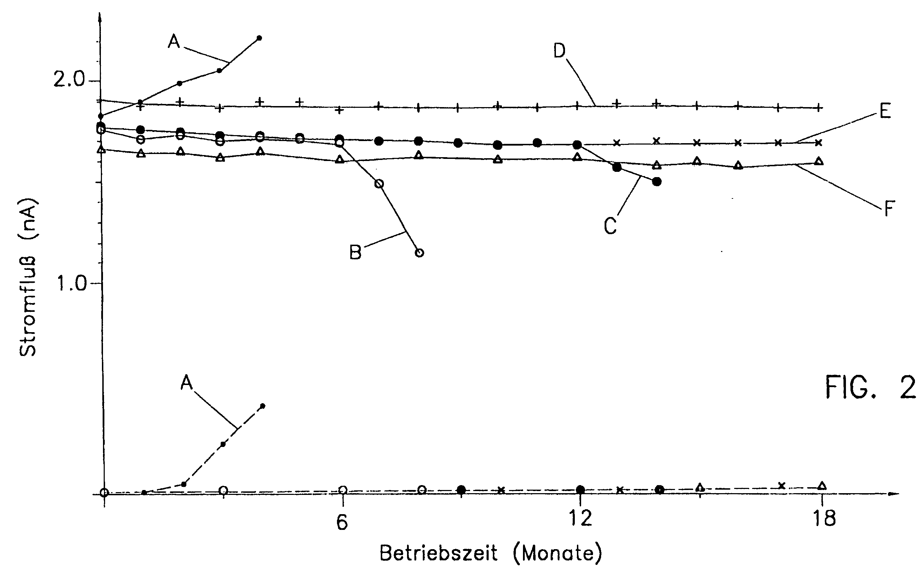

In Fig. 2 ist die zeitliche Entwicklung der Stromstärke von Sauerstoffelektroden bei pO₂ = 158 mm Hg (-) bzw. pO₂ = 0 mm Hg (---) bei Einsatz verschiedener Anodenmaterialien dargestellt:
(A) Silberanode und mediatorfreier Innenelektrolyt
(B) Graphit-Vinylharz als Anodenmaterial und mediatorfreier Innenelektrolyt
(C) Graphit-Vinylharz als Anodenmaterial und Ferrocen im Elektrolyt
(D) Kohlenstoff-NBR als Anodenmaterial und Dimethylferrocendicarboxylat im Elektrolyt
(E) Graphit-Vinylharz-MnO₂ als Anodenmaterial und mediatorfreier Elektrolyt
(F) Kohlenfaser als Anodenmaterial und mediatorfreier Elektrolyt.

Die Elektroden wurden für Langzeitversuche bei Raumtemperatur und bei permanentem Anliegen von 700 mV Betriebsspannung einem Sauerstoffpegel von 158 mm Hg (Luft) ausgesetzt.

Wie in Fig. 2 ersichtlich ist, lieferten Elektrodensysteme mit Zusatz von Ferrocen bzw. Dimethylferrocendicarboxylat im Elektrolyt (C bzw. D in Fig. 2), sowie Elektrodensysteme mit Zusatz von Mangandioxid (MnO₂) im Anodenmaterial (E)bzw. Faserkohlenstoff als Anode (0,2 g/Anode; F in Fig. 2) besonders gute Ergebnisse. Bei Einsatz von Faserkohlenstoff betrug beispielsweise die Lebensdauer aufgrund der großen aktiven Oberfläche der Anode mehr als 18 Monate.

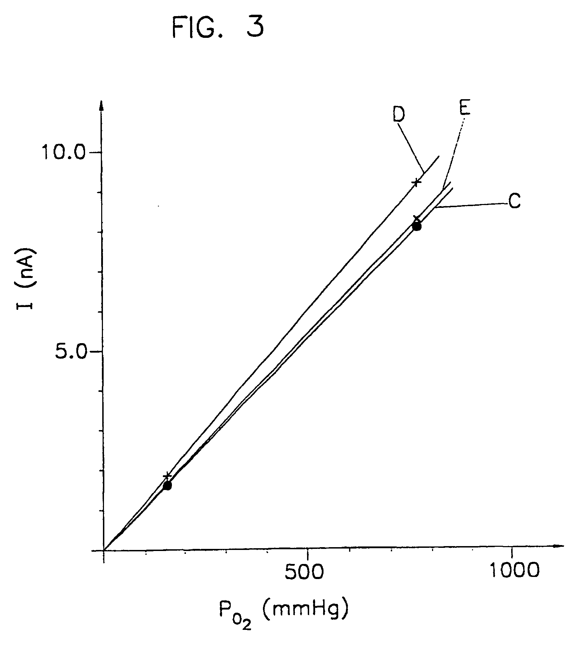

Die Abhängigkeit des Stromflusses vom Sauerstoffpartialdruck war streng linear und änderte sich über den Beobachtungszeitraum nicht. In Fig. 3 ist die streng lineare Abhängigkeit des Stromflusses vom Sauerstoffpartialdruck für die Elektrodensysteme (C), (D) und (E) nach 12-monatiger Betriebsdauer dargestellt. Die Mediatoren bewirkten offensichtlich keine Beeinflussung der Kathodenreaktion.

Während Elektroden mit dem Mn(III)-Komplex des 2,3,7,8,12-,13,17,18-Octaethyl-21H,23H-Porphins im Elektrolyt erst nach einem Monat den maximal zu erwartenden Stromfluß zeigten, waren die übrigen getesteten Elektrodensysteme nach kurzer Polarisationsdauer voll einsetzbar.

Sämtliche angeführten mediatorhaltigen Elektrodensysteme zeigten gegenüber jenen Systemen, deren Anode aus reinen Graphitpasten hergestellt wurden und deren Elektrolyt mediatorfrei war (B in Fig. 2), eine deutliche zeitliche Ausdehnung der Stromkonstanz. Es hat sich gezeigt, daß Rußzusätze ebenfalls eine Verlängerung der Lebensdauer um knapp zwei Monate infolge Vergrößerung der aktiven Anodenoberfläche bedingten.

Aus Fig. 2 ist ersichtlich, daß Graphit(Ruß)-Vinylharz- sowie die Kohlenstoff-Nitrilobutylkautschuk-(NBR)-Anoden in Kombination mit Ferrocen, Dimethylferrocendicarboxylat bzw. Mangandioxid als Mediatoren sehr gut für den Einsatz in langzeitstabilen Sauerstoffelektroden geeignet sind. Dimethylferrocendicarboxylat war als Mediator besonders geeignet, da diese Verbindung im Vergleich zu anderen Mediatoren, wie z.B. Ferrocen, eine relativ gute Löslichkeit im Elektrolyt aufwies und eine deutlich geringere Desaktivierungsneigung, hervorgerufen durch Nebenreaktionen, erkennen ließ.

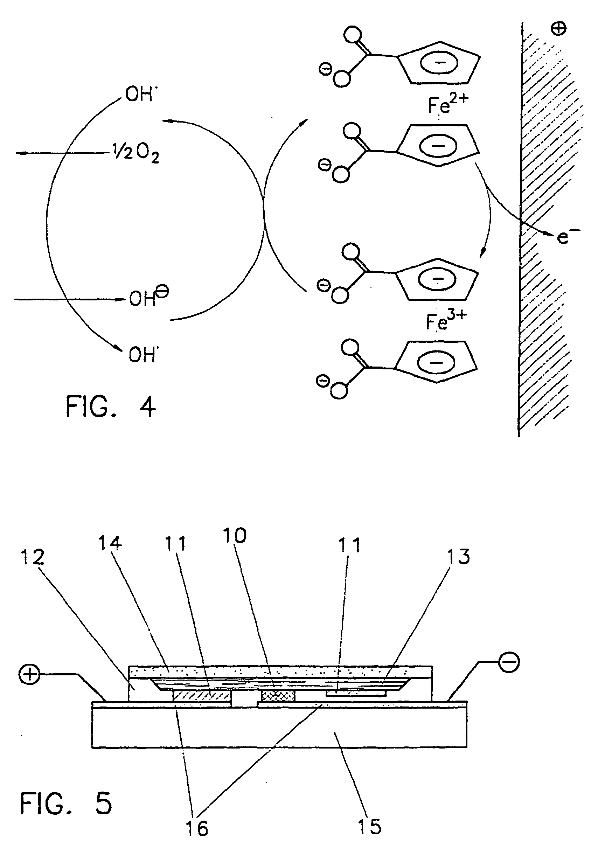

Es ist anzunehmen, daß der Dimethylester der Ferrocendicarbonsäure besonders schnell im Kathodenbereich, über längere Zeit auch weitgehend im Elektrolyt zum Ferrocendicarboxylat hydrolysiert. Dieses Ion ist in oxidierter Form einfach negativ geladen und demnach an der Kathode aufgrund elektrostatischer Abstoßung unwirksam. An der Anode läßt sich das in Fig. 4 dargestellte Reaktionsschema postulieren.

Die Lebensdauer eines Elektrodensystems unter Einsatz von Ferrocen im Elektrolyt und/oder im Anodenmaterial betrug maximal 12 Monate. Es konnte beobachtet werden, daß der Abfall des Stromflusses mit einer Entfärbung des durch den Mediator gelb gefärbten Elektrolyten einher ging. Eine Substitution des Elektrolyten stellte die Funktionsfähigkeit des Elektrodensystems wieder her. Die Funktion des Mediators war also entscheidend für die Lebensdauer.

Elektroden mit Kohlenstoff-NBR-Anoden, kombiniert mit Dimethylferrocendicarboxylat im Elektrolyt, sowie MnO₂-haltige Graphit-Vinylharz-Anoden, kombiniert mit mediatorfreien Elektrolyten, zeigten bei optimalen Stromstärken (90-100% der in einer geometrisch analogen konventionellen Sauerstoffelektrode nach Clark mit Silberanode gemessenen Stromstärke) eine Lebensdauer von 15 bis 18 Monaten.

Ein wesentlicher Vorteil des Einsatzes der erfindungsgemäßen Elektrodenmaterialien für die Gegenelektrode, bzw. im konkreten Fall der Sauerstoffelektrode für die Anode, sowie der Elektroden- bzw. Anoden-Mediator-Systeme ist die Vermeidung der bei der Sauerstoffelektrode nach Clark oft problematischen Silberabscheidung, wie eingangs erwähnt. Die Anwendung der erfindungsgemäßen Elektrodensysteme bringt besonders bei der Entwicklung sogenannter planarer Dickschicht-Sauerstoffsensoren, bei. denen die Wegstrecke zwischen Anode und Kathode klein und der Elektrolytspalt im Vergleich zum klassischen Elektrodentyp groß ist, zahlreiche Vorteile.

Als besonders günstig hat sich für diese Anwendung das Graphit-Polymer-MnO₂-Elektrodensystem herausgestellt.

Fig. 5 zeigt beispielhaft eine schematische Ansicht eines solchen Dickschicht-Sauerstoffsensors. In Fig. 5 sind ein Kathodenspot 10, symmetrisch angeordnete, flächige Anoden 11, eine Isolierschicht 12, eine Elektrolytschicht 13, eine gaspermeable Membran 14, ein Träger 15 und Abteitbahnen 16 dargestellt. Dickschicht-Sauerstoffsensoren dieser Bauart wurden unter Einsatz der erfindungsgemäßen Elektrodenmaterialien bzw. der Mediatoren im Elektrolyt unter Gerätebedingungen auf ihre Tauglichkeit im Hinblick auf Langzeitstabilität getestet, wobei, wie oben dargelegt, sehr gute Ergebnisse erzielt wurden.

Die vorliegende Erfindung ist nicht auf die dargestellten Ausfuhrunssbeispiele beschränkt, sondern umfaßt auch sämtliche Variationen, wie sie im Bereich der beigefügten Ansprüche liegen.

## Patentansprüche

1. Elektrodensystem, insbesondere für elektrochemische Sensoren, welches eine Arbeitselektrode (3), eine Gegenelektrode (4) und einen Elektrolyt umfaßt, wobei die anodisch geschaltete Gegenelektrode (4) aus einem Elektrodenmaterial gebildet ist, das ein Gemisch aus elementarem Kohlenstoff und zumindest einem Polymer umfaßt, **dadurch gekennzeichnet, daß** der Elektrolyt zumindest einen Mediator umfaßt.

2. Elektrodensystem nach Anspruch 1, **dadurch gekennzeichnet, daß** der elementare Kohlenstoff Graphit und/oder Ruß und/oder Faserkohlenstoff und/oder Glaskohlenstoff ist.

3. Elektrodensystem nach Anspruch 1 oder 2, **dadurch gekennzeichnet, daß** das Polymer aus einer Gruppe, umfassend Vinylharze, Polyolefine, Silikone, Elastomere auf Basis von Polyurethanen, Polybutadien oder Butadiencopolymere, insbesondere Nitrilobutylkautschuk, gewählt ist.

4. Elektrodensystem nach einem der Ansprüche 1 bis 3, **dadurch gekennzeichnet, daß** das Polymer Additive, insbesondere Weichmacher, Extrusionshilfen und Stabilisatoren, enthält

5. Verfahren zur Herstellung eines Elektrodensystems nach einem der Ansprüche 1 bis 4, **dadurch gekennzeichnet, daß** das Elektrodenmaterial der Gegenelektrode eine gegebenenfalls siebdruckfähige Paste ist.

6. Verfahren zur Herstellung eines Elektrodensystems nach einem der Ansprüche 1 bis 4, **dadurch gekennzeichnet, daß** das Elektrodenmaterial der Gegenelektrode ein spritzgußfähiges Gemisch, umfassend Kohlenstoff und ein thermoplastisches oder ein zu einem Duroplasten vernetzendes Polymer, ist.

7. Elektrodensystem nach einem der Ansprüche 1 bis 6, **dadurch gekennzeichnet, daß** das Elektrodenmaterial der Gegenelektrode einen Mediator umfaßt.

8. Elektrodensystem nach einem der Ansprüche 1 bis 7, **dadurch gekennzeichnet, daß** der Mediator ein Übergangsmetallkomplex ist, wobei das Metall aus einer Gruppe, umfassend Mangan, Eisen, Kobalt und Vanadium, gewählt ist.

9. Elektrodensystem nach einem der Ansprüche 1 bis 8, **dadurch gekennzeichnet, daß** der Mediator ein Übergangsmetallkomplex des Cyclopentadienidanions, insbesondere Ferrocen oder ein Derivat davon, ist.

10. Elektrodensystem nach Anspruch 9, **dadurch gekennzeichnet, daß** der Mediator Dimethylferrocendicarboxylat, dessen Hydrolyseprodukt oder ein Salz von Ferrocendicarbonsäure ist.

11. Elektrodensystem nach Anspruch 8, **dadurch gekennzeichnet, daß** der Mediator ein Mangan(II)-, Kobalt(II)- oder Vanadium(IV)-Komplex von Phthalocyanin oder ein Mn(III)-oder Kobalt(II)-Komplex von 2,3,7,8,12,13,17,18-Octaethyl-21H,23H-porphin oder Eisenhexacyanoferrat ist.

12. Elektrodensystem nach Anspruch 8, **dadurch gekennzeichnet daß** der Mediator ein Übergangsmetalloxid, vorzugsweise mittlerer Wertigkeit, insbesondere Mangandioxid, ist.

13. Elektrodensystem nach Anspruch 7, **dadurch gekennzeichnet, daß** der Mediator Tetrathiafulvalen, 7,7,8,8-Tetracyanchinodimethan oder ein Derivat oder Komplex davon, insbesondere ein 2:1-Komplex aus Tetrathiafulvalen und 7,7,8,8-Tetracyanchinodimethan, ist.

14. Elektrodensystem nach einem der Ansprüche 7 bis 13, **dadurch gekennzeichnet, daß** der Mediator im Elektrodenmaterial der Gegenelektrode in einer Konzentration in einem Bereich von etwa 1% bis etwa 30% vorhanden ist.

15. Elektrodensystem nach einem der Ansprüche 1 bis 14, **dadurch gekennzeichnet, daß** der Mediator im Elektrolyt in einer Konzentration von maximal 3 mmol/l vorhanden ist.

16. Elektrodensystem nach einem der Ansprüche 1 bis 15, **dadurch gekennzeichnet, daß** das Elektrodenmaterial der Gegenelektrode ein Gemisch aus Kohlenstoff und Nitrilobutylkautschuk und der Elektrolyt Dimethylferrocendicarboxylat als Mediator umfaßt

17. Elektrodensystem nach einem der Ansprüche 1 bis 15, **dadurch gekennzeichnet, daß** das Elektrodenmaterial der Gegenelektrode ein Gemisch aus Graphit und Vinylharz und der Elektrolyt Dimethylferrocendicarboxylat als Mediator umfaßt.

18. Elektrodensystem nach einem der Ansprüche 1 bis 15, **dadurch gekennzeichnet, daß** das Elektrodenmaterial der Gegenelektrode ein Gemisch aus Graphit und Vinylharz sowie Mangandioxid als Mediator umfaßt.

19. Elektrodensystem nach einem der Ansprüche 1 bis 18, **dadurch gekennzeichnet, daß** der Elektrolyt Ethylenglykol und/oder Wasser als Lösungsmittel enthält

20. Elektrodensystem nach einem der Ansprüche 1 bis 19, **dadurch gekennzeichnet, daß** der Elektrolyt Natriumchlorid als Leitsalz und/oder einen Phosphatpuffer enthält.

21. Verwendung eines Elektrodensystems nach einem der Ansprüche 1 bis 20 für einen amperometrischen Sauerstoffsensor, insbesondere für einen miniaturisierten amperometrischen Sauerstoffsensor.

## Claims

1. An electrode system, in particular for electrochemical sensors, comprising a working electrode (3), a counter electrode (4) and an electrolyte, the anodically connected counter electrode (4) being formed from an electrode material comprising a mixture of elemental carbon and at least one polymer, **characterized in that** the electrolyte comprises at least one mediator.

2. An electrode system according to claim 1, **characterized in that** the elemental carbon is graphite and/or carbon black and/or graphite fibre and/or graphite glass.

3. An electrode system according to claim 1 or 2, **characterized in that** the polymer is selected from a group comprising vinyl resins, polyolefins, silicones, elastomers based upon polyurethanes, polybutadienes or butadiene copolymers, in particular nitrile butyl rubber.

4. An electrode system according to any of claims 1 to 3, **characterized in that** the polymer contains additives, in particular plasticizing agents, extrusion auxiliaries and stabilizers.

5. A process for the production of an electrode system according to any of claims 1 to 4, **characterized in that** the electrode material of the counter electrode is a paste which optionally is suitable for screen-printing.

6. A process for the production of an electrode system according to any of claims 1 to 4, **characterized in that** the electrode material of the counter electrode is an injection-mouldable mixture comprising carbon and a thermoplastic polymer or a polymer that is cross-linkable to a thermosetting material.

7. An electrode system according to any of claims 1 to 6, **characterized in that** the electrode material of the counter electrode comprises a mediator.

8. An electrode system according to any of claims 1 to 7, **characterized in that** the mediator is a transition metal complex, the metal being selected from a group comprising manganese, iron, cobalt and vanadium.

9. An electrode system according to any of claims 1 to 8, **characterized in that** the mediator is a transition metal complex of the cyclopentadienide anion, in particular ferrocene or a derivative thereof.

10. An electrode system according to claim 9, **characterized in that** the mediator is dimethyl ferrocene dicarboxylate, the hydrolysis product thereof or a salt of ferrocene dicarboxylic acid.

11. An electrode system according to claim 8, **characterized in that** the mediator is a manganese(II), cobalt(II) or vanadium(IV) complex of phthalocyanine or an Mn(III) or cobalt(II) complex of 2,3,7,8,12,13,17,18-octaethyl-21H,23H-porphine or iron hexacyanoferrate.

12. An electrode system according to claim 8, **characterized in that** the mediator is a transition metal oxide, preferably of average valence, in particular manganese dioxide.

13. An electrode system according to claim 7, **characterized in that** the mediator is tetrathiafulvalene, 7,7,8,8-tetracyanoquinodimethane or a derivative or complex thereof, in particular a 1:1 complex of tetrathiafulvalene and 7,7,8,8-tetracyanoquinodimethane.

14. An electrode system according to any of claims 7 to 13, **characterized in that** the mediator is provided in the electrode material of the counter electrode at a concentration ranging from about 1% to about 30%.

15. An electrode system according to any of claims 1 to 14, **characterized in that** the mediator is provided in the electrolyte at a concentration of 3 mmol/l at the most.

16. An electrode system according to any of claims 1 to 15, **characterized in that** the electrode material of the counter electrode comprises a mixture of carbon and nitrile butyl rubber and the electrolyte comprises dimethyl ferrocene dicarboxylate as a mediator.

17. An electrode system according to any of claims 1 to 15, **characterized in that** the electrode material of the counter electrode comprises a mixture of graphite and vinyl resin and the electrolyte comprises dimethyl ferrocene dicarboxylate as a mediator.

18. An electrode system according to any of claims 1 to 15, **characterized in that** the electrode material of the counter electrode comprises a mixture of graphite and vinyl resin as well as manganese dioxide as a mediator.

19. An electrode system according to any of claims 1 to 18, **characterized in that** the electrolyte contains ethylene glycol and/or water as a solvent.

20. An electrode system according to any of claims 1 to 19, **characterized in that** the electrolyte contains sodium chloride as a supporting electrolyte and/or a phosphate buffer.

21. The use of an electrode system according to any of claims 1 to 20 for an amperometric oxygen sensor, in particular for a miniaturized amperometric oxygen sensor.

## Revendications

1. Système d'électrode, en particulier pour des capteurs électrochimiques, qui comprend une électrode de travail (3), une contre-électrode (4) et un électrolyte, la contre-électrode (4) branchée de façon anodique étant formée dans un matériau d'électrode, qui comprend un mélange de carbone élémentaire et au moins un polymère, **caractérisé en ce que** l'électrolyte comprend au moins un médiateur.

2. Système d'électrode selon la revendication 1,
**caractérisé en ce que** le carbone élémentaire est du graphite et/ou du noir de carbone et/ou du carbone fibreux et/ou du carbone vitreux.

3. Système d'électrode selon la revendication 1 ou 2, **caractérisé en ce que** le polymère est choisi dans un groupe, comprenant des résines vinyliques, des polyoléfines, des silicones, des élastomères à base de polyuréthannes, du polybutadiène ou des copolymères de butadiène, en particulier du caoutchouc nitrobutyle.

4. Système d'électrode selon l'une quelconque des revendications 1 à 3, **caractérisé en ce que** le polymère contient des additifs, en particulier des plastifiants, des aides à l'extrusion et des stabilisants.

5. Procédé pour la fabrication d'un système d'électrode selon l'une quelconque des revendications 1 à 4, **caractérisé en ce que** le matériau d'électrode de la contre-électrode est une pâte éventuellement apte à la sérigraphie.

6. Procédé pour la fabrication d'un système d'électrode selon l'une quelconque des revendications 1 à 4, **caractérisé en ce que** le matériau d'électrode de la contre-électrode est un mélange apte au moulage par injection, comprenant du carbone et un polymère thermoplastique ou réticulant pour former un duroplaste.

7. Système d'électrode selon l'une quelconque des revendications 1 à 6, **caractérisé en ce que** le matériau d'électrode de la contre-électrode comprend un médiateur.

8. Système d'électrode selon l'une quelconque des revendications 1 à 7, **caractérisé en ce que** le médiateur est un complexe de métal transitoire, le métal étant choisi dans un groupe comprenant du manganèse, du fer, du cobalt et du vanadium.

9. Système d'électrode selon l'une quelconque des revendications 1 à 8, **caractérisé en ce que** le médiateur est un complexe de métal transitoire de l'anion de cyclopentadiènide, en particulier du ferrocène ou un dérivé de celui-ci.

10. Système d'électrode selon la revendication 9, **caractérisé en ce que** le médiateur est du dicarboxylate de diméthylferrocène, son produit d'hydrolyse ou un sel d'acide dicarboxylique de ferrocène.

11. Système d'électrode selon la revendication 8, **caractérisé en ce que** le médiateur est un complexe de manganèse (II), de cobalt (II) ou de vanadium (IV) de phthalocyanine ou un complexe de Mn (III) ou de cobalt (II) de 2, 3, 7, 8, 12, 13, 17, 18-octaéthyl-21H, 23H-porphine ou du hexacyanoferrate de fer.

12. Système d'électrode selon la revendication 8, **caractérisé en ce que** le médiateur est un oxyde de métal transitoire, de préférence de valence moyenne, en particulier du dioxyde de manganèse.

13. Système d'électrode selon la revendication 7, **caractérisé en ce que** le médiateur est du tétrathiafulvalène, du 7, 7, 8, 8-tétracyanchinodiméthane ou un dérivé ou un complexe de ce produit, en particulier un complexe 1:1 à base de tétrathiafulvalène et de 7, 7, 8, 8-tétracyanchinodiméthane.

14. Système d'électrode selon l'une quelconque des revendications 7 à 13, **caractérisé en ce que** le médiateur est présent dans le matériau d'électrode de la contre-électrode dans une concentration allant d'environ 1 % jusqu'à environ 30 %.

15. Système d'électrode selon l'une quelconque des revendications 1 à 14, **caractérisé en ce que** le médiateur est présent dans l'électrolyte dans une concentration de maximum 3 mmôles/l.

16. Système d'électrode selon l'une quelconque des revendications 1 à 15, **caractérisé en ce que** le matériau d'électrode de la contre-électrode comprend un mélange de carbone et de caoutchouc nitrobutyle et l'électrolyte comprend du dicarboxylate de diméthylferrocène comme médiateur.

17. Système d'électrode selon l'une quelconque des revendications 1 à 15, **caractérisé en ce que** le matériau d'électrode de la contre-électrode comprend un mélange de graphite et de résine vinylique et l'électrolyte comprend du dicarboxylate de diméthylferrocène comme médiateur.

18. Système d'électrode selon l'une quelconque des revendications 1 à 5, **caractérisé en ce que** le matériau d'électrode de la contre-électrode comprend un mélange de graphite de résine vinylique ainsi que du dioxyde de manganèse comme médiateur.

19. Système d'électrode selon l'une quelconque des revendications 1 à 18, **caractérisé en ce que** l'électrolyte contient de l'éthylèneglylcol et/ou de l'eau comme solvant.

20. Système d'électrode selon l'une quelconque des revendications 1 à 19, **caractérisé en ce que** l'électrolyte contient du chlorure de sodium comme sel conducteur et/ou un tampon de phosphate.

21. Utilisation d'un système d'électrode selon l'une quelconque des revendications 1 à 20 pour un capteur d'oxygène ampérométrique, en particulier pour un capteur d'oxygène ampéromatrique miniaturisé
